# EUROPÄISCHE PATENTSCHRIFT

(11) **EP 3 534 387 B1**
(45) Veröffentlichungstag und Bekanntmachung des Hinweises auf die Patenterteilung: **05.01.2022**
(21) Anmeldenummer: 19151547.7
(22) Anmeldetag: 14.01.2019
(51) Int. Cl.: H01H 3/06, H01H 23/14

(54) **ELEKTRISCHER KIPPHEBELSCHALTER**
ELECTRICAL TOGGLE SWITCH
INTERRUPTEUR ÉLECTRIQUE À BASCULE

(30) Priorität: 01.03.2018 DE 102018104658
(43) Veröffentlichungstag der Anmeldung: 04.09.2019
(73) Patentinhaber: Albrecht Jung GmbH & Co. KG, 58579 Schalksmühle (DE)
(72) Erfinder: Rodemann, Burkhard, 58579 Schalksmühle (DE)

(56) Entgegenhaltungen:
- DE-C- 697 960
- FR-A1- 3 023 964
- US-A- 4 234 774
- US-A- 5 900 584

## Beschreibung

Die vorliegende Erfindung geht von einem gemäß Oberbegriff des Hauptanspruches konzipierten elektrischen Kipphebelschalter aus.

Derartige elektrische Kipphebelschalter sind in der Regel dafür vorgesehen, die Ein-und Ausschaltung eines Stromkreises beziehungsweise die Umschaltung von einem auf einen anderen Stromkreis zu bewirken. Bei solchen elektrischen Kipphebelschaltern können die unterschiedlichsten Kontaktsysteme (feststehende und bewegbare Kontaktteile) beziehungsweise Schaltapparate Verwendung finden. Die Betätigung solcher elektrischen Kipphebelschalter erfolgt üblicherweise durch das Verschwenken zumindest eines als Kipphebel ausgeführten Betätigungselementes. Ausgehend von seiner Ausgangs- beziehungsweise Ruhestellung kann das Betätigungselement üblicherweise in zumindest eine Funktionsstellung verschwenkt werden. Es sind auch elektrische Kipphebelschalter bekannt, bei denen das als Kipphebel ausgeführte Betätigungselement ausgehend von einer Ausgangsstellung in zwei Funktionsstellungen verschwenkt werden kann. Die Funktionsstellung beziehungsweise die Funktionsstellungen können tastend oder rastend ausgeführt sein. Üblicherweise werden derartige elektrische Kipphebelschalter als Taster bezeichnet, wenn das als Kipphebel ausgeführte Betätigungselement nach einem Betätigungsvorgang automatisch aus der Funktionsstellung wieder in die Ausgangs- beziehungsweise Ruhestellung zurückkehrt. Das beeinflusste elektrische Kontaktteil bleibt hingegen in der durch diesen Betätigungsvorgang verursachten Schaltposition. Erst bei einem nochmaligen Betätigungsvorgang wechselt dann dieses Kontaktteil auch seine Schaltposition. Oftmals sind solche elektrischen Kipphebelschalter mit einem Leuchtmittel ausgerüstet, damit entweder eine Funktionsanzeige und/oder eine Suchbeleuchtung realisiert werden kann beziehungsweise können. Auch sind elektrische Kipphebelschalter bekannt, deren Schaltapparate mit mehreren Schaltstücken ausgerüstet sind, welche jeweils mit einem als Kipphebel ausgeführten Betätigungselement in Verbindung stehen. Zum Beispiel als Serienschalter bezeichnete elektrische Kipphebelschalter weisen dann zwei unabhängig voneinander betätigbare Schaltstücke auf, die jeweils mit einem als Kipphebel ausgeführten Betätigungselement in Verbindung stehen.

Ein dem Oberbegriff des Hauptanspruches entsprechender elektrischer Kipphebelschalter ist durch die US 4 234 774 A bekannt geworden. Dieser elektrische Kipphebelschalter ist mit einem als Kipphebel ausgeführten Betätigungselement versehen, welches einerseits über ein Schaltstück mit beweglichen elektrischen Kontaktteilen eines Schaltapparates zusammenwirkt und ist andererseits mit seinem freien Endbereich durch eine Öffnung einer Abdeckplatte nach außen geführt. Der Schaltapparat steht zur Festlegung in einer Installationsdose mit einem Tragring in Verbindung und weist die zum Anschluss an ein elektrisches Installationssystem eines Gebäudes notwendigen, elektrischen Anschlusskontaktteile auf. Ein Adapter ist an einem Schaltstück des Schaltapparates festgelegt, welcher eine Aufnahme zur Festlegung des zumindest einen als Kipphebel ausgeführten Betätigungselementes aufweist. Als Grundlage für die Festlegung des Adapters ist ein bereits als Kipphebelschalter ausgeführter Schaltapparat vorgesehen.

Zudem ist durch die DE 697 960 A aus dem Jahre 1938 ein elektrischer Kipphebelschalter bekannt geworden. Dieser elektrische Kipphebelschalter weist mehrere als Kipphebel ausgeführten Betätigungselemente auf, welche jeweils über ein Schaltstück mit zugehörigen, beweglichen, elektrischen Kontaktteilen eines Schaltapparates zusammenwirken, wobei die als Kipphebel ausgeführten Betätigungselemente andererseits mit ihren freien Endbereichen durch eine Öffnung einer Abdeckplatte nach außen geführt sind. Der Schaltapparat steht zur Festlegung in einer Installationsdose mit einem Tragring in Verbindung und weist die zum Anschluss an ein elektrisches Installationssystem eines Gebäudes notwendigen elektrischen Anschlusskontaktteile auf. Ein solcher elektrischer Kipphebelschalter ist hinsichtlich seiner Funktionalitäten auf die Möglichkeiten eingeschränkt, welche konstruktionsbedingt vorgegeben sind.

Außerdem ist durch die FR 3 023 964 A1 ein elektrischer Schalter zur Installation in Gebäuden bekannt geworden. Dieser elektrische Schalter weist einen Schaltapparat und eine Abdeckanordnung auf und kann mit unterschiedlichen Betätigungselementen ausgerüstet werden. Um dies zu realisieren, ist der Designplatte eine Grundplatte zugeordnet, welche im Zusammenwirken mit dem Betätigungselement und einer am Schaltstück festlegbaren Koppelplatte für eine funktionsgerechte Anordnung des Betätigungselementes sorgt. Das Betätigungselement kann auch als Kipphebel ausgeführt sein.

Der vorliegenden Erfindung liegt deshalb die Aufgabe zugrunde, einen elektrischen Kipphebelschalter zu schaffen, welcher lediglich durch den Einsatz eines Adapters, ausgehend von einem bereits vorhandenen elektrischen Schaltapparat (Wippenschalter, Tastschalter und so weiter) auf besonders einfache und kostengünstige Art und Weise in einen Kipphebelschalter umfunktioniert werden kann. Vorteilhafterweise sind dabei unterschiedliche Funktionalitäten, wie die Möglichkeit, ausgehend von einer Ruhestellung, je nach Bedarf eine oder mehrere Funktionsstellungen anzubieten, die tastend und/oder rastend ausgeführt sein können, bereits durch den jeweils verwendeten Schaltapparat vorgegeben. Es bedarf somit keiner ansonsten notwendig werdenden, aufwendigen und kostenintensiven Entwicklungstätigkeit.

Diese Aufgabe wird durch die im Hauptanspruch angegebenen Merkmale gelöst.

Bei einem solchermaßen ausgebildeten elektrischen Kipphebelschalter ist besonders vorteilhaft, dass das als Kipphebel ausgeführte Betätigungselement leicht austauschbar an einem Adapter festgelegt werden kann, welcher seinerseits an dem Schaltstück des Schaltapparates rastend festgelegt ist. Vorteilhafterweise kann das als Kipphebel ausgeführte Betätigungselement sowohl einteilig als auch mehrteilig ausgeführt sein, um auf einfache Art und Weise verschiedene Designs umsetzen zu können.

Weitere vorteilhafte Ausgestaltungen des erfindungsgemäßen Gegenstandes sind in den Unteransprüchen angegeben. Anhand zweier Ausführungsbeispiele sei der erfindungsgemäße Gegenstand näher erläutert. Dabei zeigen:
- Fig. 1:: prinziphaft einen Kipphebelschalter mit einem als Kipphebel ausgeführten Betätigungselement gemäß erstem Ausführungsbeispiel, räumlich in schräger Draufsicht;
- Fig. 2:: prinziphaft eine Explosionsdarstellung eines Kipphebelschalters gemäß Figur 1;
- Fig.3:: prinziphaft einen Kipphebelschalter mit zwei als Kipphebel ausgeführten Betätigungselementen gemäß zweitem Ausführungsbeispiel, räumlich in schräger Draufsicht;
- Fig.4:: prinziphaft eine Explosionsdarstellung eines Kipphebelschalters gemäß Figur 3;
- Fig. 5:: prinziphaft ein als Kipphebel ausgeführtes Betätigungselement, in zweiteiliger Ausführung, vergrößert, räumlich in Explosionsdarstellung.

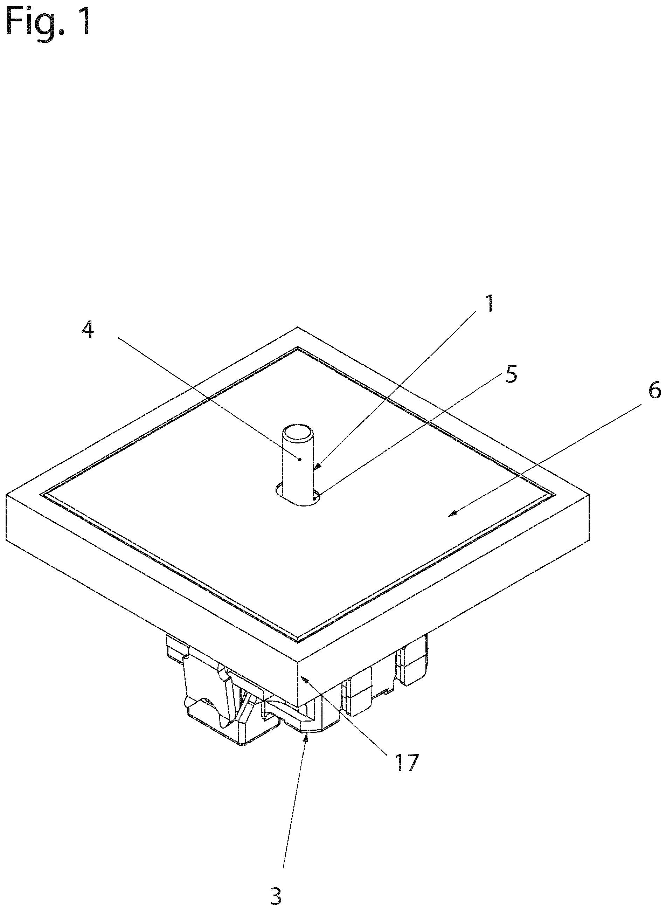

Wie aus den Figuren hervorgeht, weist ein solcher elektrischer Kipphebelschalter zumindest ein als Kipphebel ausgeführtes Betätigungselement 1 auf, welches einerseits über ein Schaltstück 2 mit - der Einfachheit halber nicht dargestellten - beweglichen elektrischen Kontaktteilen eines Schaltapparates 3 zusammenwirkt und welches andererseits mit seinem freien Endbereich 4 durch eine Öffnung 5 einer Abdeckplatte 6 nach außen geführt ist. Der Schaltapparat 3 steht mit einem Tragring 7 in Verbindung und weist die zum Anschluss an ein elektrisches Installationssystem eines Gebäudes notwendigen - der Einfachheit halber nicht dargestellten - elektrischen Anschlusskontaktteile auf. An dem Schaltstück 2 beziehungsweise an den beiden Schaltstücken 2 des Schaltapparates 3 ist ein Adapter 8 festgelegt, welcher eine Aufnahme 9 zur Festlegung eines als Kipphebel ausgeführten Betätigungselementes 1 aufweist. Bei den beiden Ausführungsbeispielen gemäß der Figuren 1 bis 4 ist die Aufnahme 9 köcherförmig ausgeführt und einstückig an den Adapter 8 angeformt. Das als Kipphebel ausgeführte Betätigungselement 1 weist eine einstückige Ausführung auf.

Wie des Weiteren aus den Figuren 1 bis 4 hervorgeht, sind an den Adapter 8 mehrere Rastarme 10 angeformt, welche zur Herstellung einer rastenden Verbindung mit entsprechend ausgeführten, an das Schaltstück 2 angeformten Rastkanten 11 zusammenwirken. Mittels einer derartigen Rastverbindung ist der Adapter 8 besonders sicher und formstabil am zugehörigen Schaltstück 2 festgelegt. Die köcherförmige Aufnahme 9 des Adapters 8 weist eine angeformte Clipszunge 12 auf, welche zur Herstellung einer Clipsverbindung clipsend mit einer entsprechenden Einkerbung 13 des einstückigen, als Kipphebel ausgeführten Betätigungselementes 1 zusammenwirkt. Die Einkerbung 13 ist in dem, dem Adapter 8 zugewandten zweiten Endbereich 14 des als Kipphebel ausgeführten Betätigungselementes 1 vorhanden. Mittels einer derartigen Clipsverbindung ist das als Kipphebel ausgeführte Betätigungselement 1 besonders sicher und formstabil am zugehörigen Adapter 8 beziehungsweise in dessen köcherförmige Aufnahme 9 festgelegt. Der zweite Endbereich 14 des als Kipphebel ausgeführten Betätigungselementes 1 und die köcherförmige Aufnahme 9 sind geometrisch derart aufeinander abgestimmt (Abflachung, Verzahnung und so weiter), so dass über diese geometrischen Ausgestaltungen ein Verdrehschutz für das als Kipphebel ausgeführte Betätigungselement 1 realisiert ist.

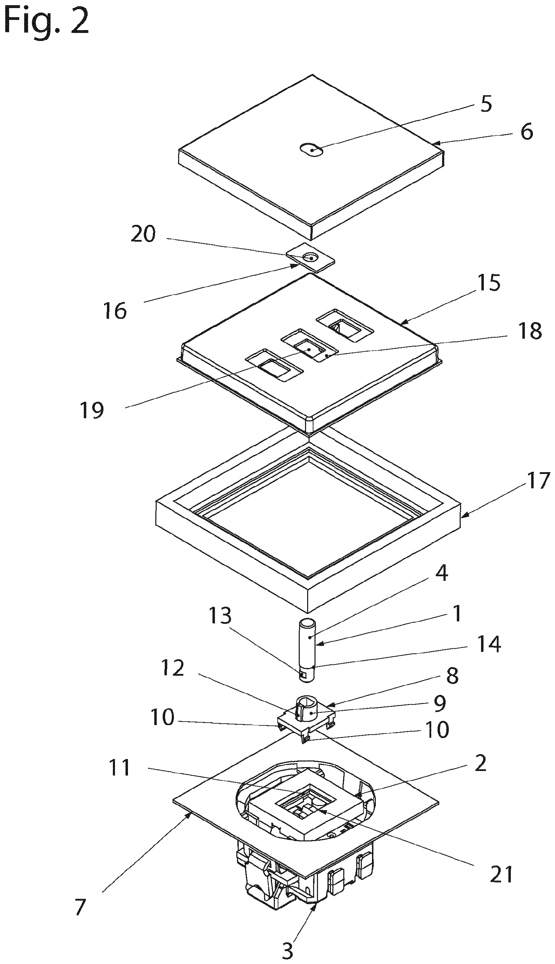

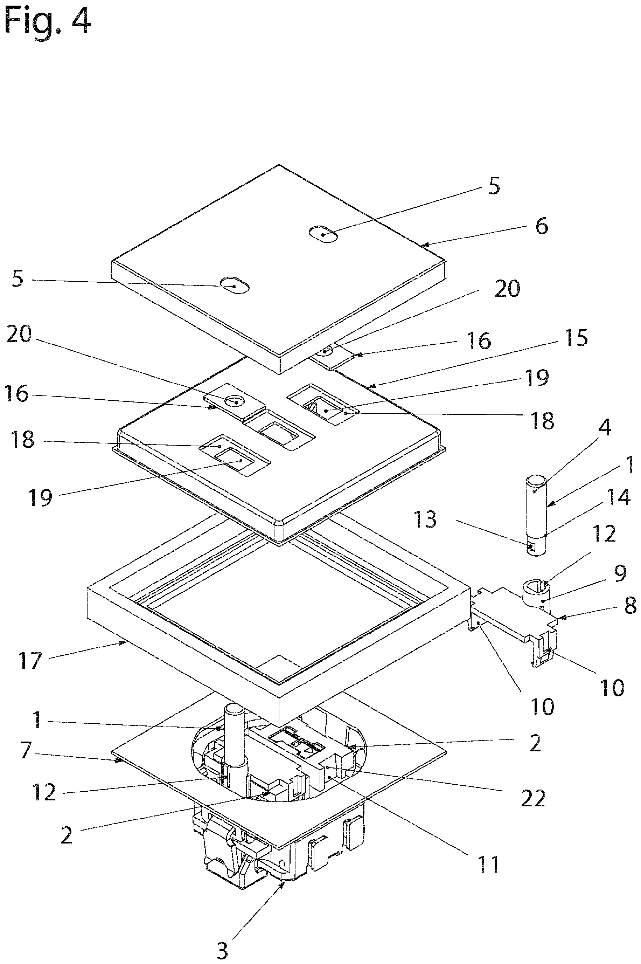

Wie zudem insbesondere aus Figur 2 und Figur 4 hervorgeht, ist der dem Schaltapparat 3 zugewandten Unterseite der Abdeckplatte 6 ein Zwischenteil 15 zugeordnet, welches zur verschieblichen Aufnahme eines Blendenteils 16 beziehungsweise zweier Blendenteile 16 vorgesehen ist. Jedes Blendenteil 16 wirkt mit dem zugeordneten, als Kipphebel ausgeführten Betätigungselement 1 zusammen. Zudem ist jedes Blendenteil 16 in einer, maßlich entsprechend ausgeführten, rechteckförmigen Ausnehmung 18 der Zwischenplatte 15 verschieblich gehalten und deckt dabei den größten Teil des für den Durchtritt des als Kipphebel ausgeführten Betätigungselementes 1 vorgesehenen Öffnungsbereiches 19 des Zwischenteils 15 ab. Mit seiner Durchtrittsöffnung 20 umschließt das Blendenteil 16 den zugehörigen Abschnitt des als Kipphebel ausgeführten Betätigungselementes 1 formschlüssig. Das Blendenteil 16 dient somit nicht nur als formschöner Sichtschutz, damit dem Benutzer der Blick in den Innenraum des Schaltapparates 3 verwehrt wird, sondern dient zudem auch als Dichtung, damit der Innenraum des Schaltapparates 3 gegen den Eintritt von Staub und Flüssigkeiten geschützt ist. Die mit einer Öffnung 5 beziehungsweise mit zwei Öffnungen 5 versehene Abdeckplatte 6 ist bei den beiden vorliegenden Ausführungsbespielen von einem Designrahmen 17 umgeben. Wie bereits erwähnt, ist die Öffnung 5 beziehungsweise sind die beiden Öffnungen 5 zum Durchtritt des freien Endbereiches 4 des zugehörigen, als Kipphebel ausgeführten Betätigungselementes 1 vorgesehen.

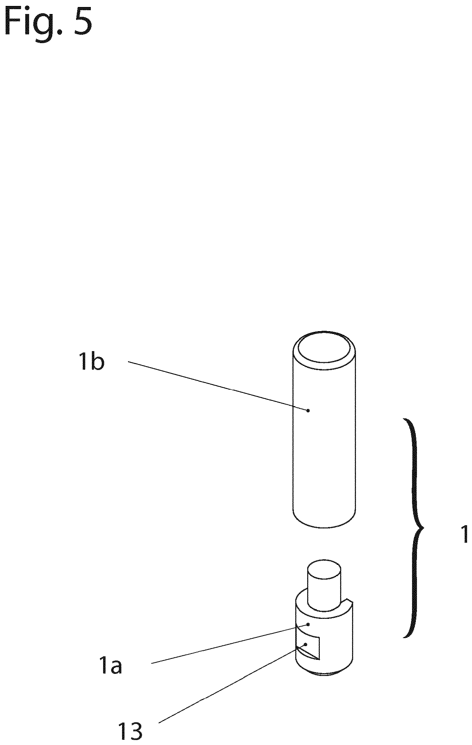

Wie insbesondere aus Figur 5 hervorgeht, kann das als Kipphebel ausgeführte Betätigungselement 1 auch mehrteilig, im vorliegenden Fall zweiteilig, ausgeführt sein, wobei dieses aus einem mit der köcherförmigen Aufnahme 9 zusammenwirkenden Grundteil 1a und einem am Grundteil 1a festgelegten Designteil 1b besteht. Auf einfache Art und Weise können somit unterschiedlich ausgeführte Designteile 1b je nach Bedarf beziehungsweise gewünschter Designausgestaltung am Grundteil 1a festgelegt werden. Auch ein nachträglicher Austausch von Designteilen 1b ist somit auf besonders einfache Art und Weise möglich. In den Figuren 1 bis 4 ist hingegen - wie bereits erwähnt - eine einstückige Ausführung eines als Kipphebel ausgeführten Betätigungselementes 1 dargestellt. Auch ein solches, als Kipphebel ausgeführtes einstückiges Betätigungselement 1 eröffnet die Möglichkeit, auf besonders einfache Art und Weise verschiedene Designs umsetzen zu können.

Wie insbesondere aus den Figuren 1 und 2 hervorgeht, kommt beim vorliegenden ersten Ausführungsbeispiel ein Schaltapparat 3 zur Verwendung, welcher mit einem einzigen, mit den - der Einfachheit halber nicht dargestellten - bewegbaren Kontaktteile zusammenwirkenden Schaltstück 2 ausgerüstet ist. Somit wird dem Schaltstück 2 über einen einzigen Adapter 8 ein einziges als Kipphebel ausgeführtes Betätigungselement 1 zuzuordnen. Beim vorliegenden ersten Ausführungsbeispiel sind an den Adapter 8 vier Rastarme 10 angeformt, welche rastend mit entsprechend ausgeformten Rastkanten 11 des Schaltstückes 2 in Wirkverbindung treten. Die Rastkanten 11 sind an eine rechteckförmige Aufnahmeöffnung 21 angeformt, welche sich mittig im Kopfstück des Schaltstücks 2 befindet. Der Hauptkörper des Adapters 8 wird zur Festlegung in Art eines Passstückes in die Aufnahmeöffnung 21 eingesetzt, wobei die vier Rastarme 10 mit ihren angeformten Rasthaken die zugeordneten Rastkanten 11 krallenartig hintergreifen.

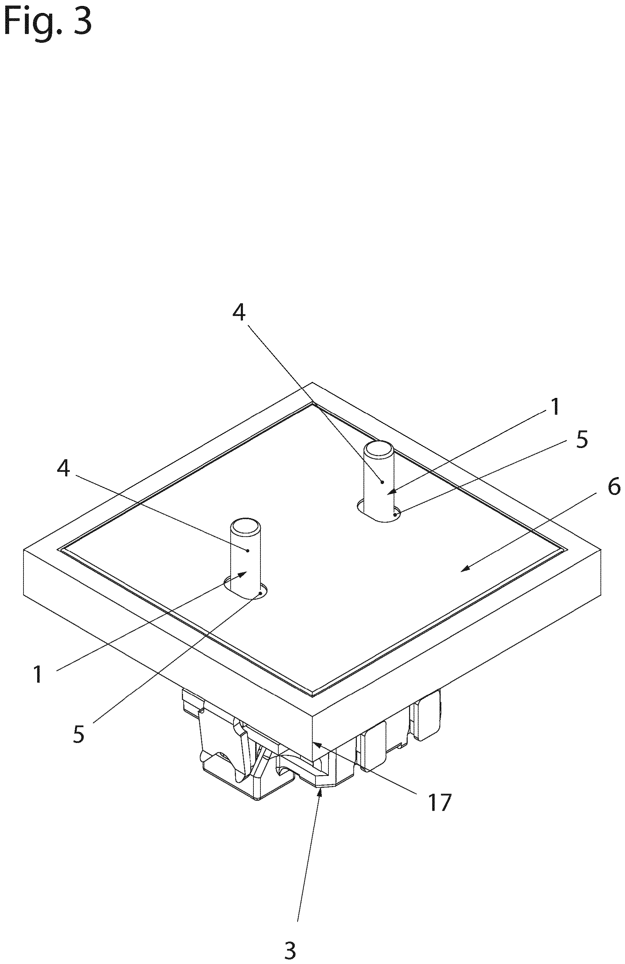

Wie insbesondere aus den Figuren 3 und 4 hervorgeht, kommt beim vorliegenden zweiten Ausführungsbeispiel ein Schaltapparat 3 zur Verwendung, welcher mit zwei, jeweils mit - der Einfachheit halber nicht dargestellten - bewegbaren Kontaktteilen zusammenwirkenden Schaltstücken 2 ausgerüstet ist. Somit besteht die Möglichkeit, jedes der beiden Schaltstücke 2 mit einem eigenen Adapter 8 auszurüsten, welcher jeweils zur Aufnahme eines als Kipphebel ausgeführten Betätigungselementes 1 vorgesehen ist. Beim vorliegenden zweiten Ausführungsbeispiel sind an jeden Adapter 8 zwei Rastarme 10 angeformt, welche rastend mit entsprechend ausgeformten Rastkanten 11 des Schaltstückes 2 in Wirkverbindung treten. Die Rastkanten 11 sind jeweils an die beiden Stirnseite des Kopfstücks des Schaltstücks 2 angeformt. Zudem befindet sich in jeder der beiden Stirnseiten eine nutartige Aufnahme 22, in welche die zugeordneten Rastarme 10 des Adapters 8 in Art eines Passstückes eingreifen, wobei die beiden Rastarme 10 mit ihren angeformten Rasthaken die zugeordneten Rastkanten 11 klammerartig umgreifen.

Je nach Verwendung eines bereits vorhandenen Schaltapparates 3 besteht die Möglichkeit das als Kipphebel ausgeführte Betätigungselement 1, ausgehend von seiner Ausgangs- beziehungsweise Ruhestellung, in eine, in zwei oder auch mehrere Funktionsstellungen zu verschwenken. Die Funktionsstellung beziehungsweise die Funktionsstellungen können dabei, je nach Ausführung des Schaltapparates 3, tastend und/oder rastend ausgeführt sein.

Es ist somit ein elektrischer Kipphebelschalter geschaffen, welcher lediglich durch den Einsatz eines Adapters 8 oder mehrerer Adapter 8, ausgehend von einem bereits vorhandenen elektrischen Schaltapparat 3 (Wippenschalter, Tastschalter und so weiter), auf besonders einfache und kostengünstige Art und Weise in einen Kipphebelschalter umfunktioniert werden kann. Vorteilhafterweise sind dabei unterschiedliche, durch den jeweils verwendeten elektrischen Schaltapparat 3 vorgegebene Funktionalitäten, wie vorstehend beschrieben, bedarfsweise umsetzbar. Vorteilhafterweise kann bei einem derartigen Kipphebelschalter das als Kipphebel ausgeführte Betätigungselement 1 leicht austauschbar an einem Adapter 8 festgelegt werden, welcher seinerseits an dem zugehörigen Schaltstück 2 des Schaltapparates 3 rastend festgelegt ist. Vorteilhafterweise kann zudem das als Kipphebel ausgeführte Betätigungselement 1 bedarfsweise anstatt einteilig auch zweiteilig beziehungsweise mehrteilig ausgeführt sein, um auf einfache Art und Weise verschiedene Designs umsetzen zu können. Bei einer Zweiteiligkeit ist das als Kipphebel ausgeführte Betätigungselement 1 dann aufgeteilt in ein an der köcherförmigen Aufnahme 9 festgelegtes Grundteil 1a und ein am Grundteil 1a festgelegtes Designteil 1b.

### Bezugszeichenliste

- 1: Betätigungselement
- 1a: Grundteil
- 1b: Designteil
- 2: Schaltstück
- 3: Schaltapparat
- 4: Freier Endbereich
- 5: Öffnung
- 6: Abdeckplatte
- 7: Tragring
- 8: Adapter
- 9: Aufnahme
- 10: Rastarme
- 11: Rastkanten
- 12: Clipszunge
- 13: Einkerbung
- 14: Zweiter Endbereich
- 15: Zwischenteil
- 16: Blendenteil
- 17: Designrahmen
- 18: Ausnehmung
- 19: Öffnungsbereich
- 20: Durchtrittsöffnung
- 21: Aufnahmeöffnung
- 22: Nutartige Aufnahme

## Patentansprüche

1. Elektrischer Kipphebelschalter mit zumindest einem als Kipphebel ausgeführten Betätigungselement (1), welches einerseits über ein Schaltstück (2) mit beweglichen elektrischen Kontaktteilen eines Schaltapparates (3) zusammenwirkt und welches andererseits mit seinem freien Endbereich (4) durch eine Öffnung (5) einer Abdeckplatte (6) nach außen geführt ist, wobei der Schaltapparat (3) mit einem Tragring (7) in Verbindung steht, sowie die zum Anschluss an ein elektrisches Installationssystem eines Gebäudes notwendigen, elektrischen Anschlusskontaktteile aufweist, wobei an zumindest einem Schaltstück (2) des Schaltapparates (3) ein Adapter (8) festgelegt ist, welcher eine Aufnahme (9) zur Festlegung des zumindest einen als Kipphebel ausgeführten Betätigungselementes (1) aufweist, **dadurch gekennzeichnet, dass** an den Adapter (8) mehrere Rastarme (10) angeformt sind, die zur Herstellung einer rastenden Verbindung mit entsprechend ausgeführten, an das Schaltstück (2) angeformten Rastkanten (11) zusammenwirken, und dass an die Aufnahme (9) zumindest eine Clipszunge (12) angeformt ist, welche zur Herstellung einer Clipsverbindung clipsend mit zumindest einer entsprechenden Einkerbung (13) zusammenwirkt, welche in dem, dem Adapter (8) zugewandten zweiten Endbereich (14) des als Kipphebel ausgeführten Betätigungselementes (1) vorhanden ist, und dass die am Adapter (8) vorhandene Aufnahme (9) köcherförmig ausgeführt ist.

2. Elektrischer Kipphebelschalter nach Anspruch 1, **dadurch gekennzeichnet, dass** der Schaltapparat (3) über mehrere mit beweglichen elektrischen Kontaktteilen zusammenwirkende Schaltstücke (2) verfügt, die jeweils mit einem Adapter (8) zur Festlegung eines als Kipphebel ausgeführten Betätigungselementes (1) versehen sind.

3. Elektrischer Kipphebelschalter nach einem der Ansprüche 1 bis 2, **dadurch gekennzeichnet, dass** der dem Schaltapparat (3) zugewandten Unterseite der Abdeckplatte (6) zumindest ein Zwischenteil (15) zugeordnet ist, welches zur verschieblichen Aufnahme eines Blendenteils (16) vorgesehen ist, welches mit dem als Kipphebel ausgeführten Betätigungselement (1) zusammenwirkt.

4. Elektrischer Kipphebelschalter nach einem der Ansprüche 1 bis 3, **dadurch gekennzeichnet, dass** die Abdeckplatte (6) von einem Designrahmen (17) umgeben ist.

5. Elektrischer Kipphebelschalter nach einem der Ansprüche 1 bis 4, **dadurch gekennzeichnet, dass** das als Kipphebel ausgeführte Betätigungselement (1) zweiteilig ausgeführt ist und aus einem mit der Aufnahme (9) zusammenwirkenden Grundteil (1a) und einem am Grundteil (1a) festgelegten Designteil (1b) besteht.

6. Elektrischer Kipphebelschalter nach einem der Ansprüche 1 bis 5, **dadurch gekennzeichnet, dass** die Aufnahme (9) einstückig am Adapter (8) vorhanden ist.

7. Elektrischer Kipphebelschalter nach einem der Ansprüche 1 bis 5, **dadurch gekennzeichnet, dass** die Aufnahme (9) stoffschlüssig mit dem Adapter (8) in Verbindung steht.

## Claims

1. Electric toggle switch having at least one actuating element (1) which is designed as a toggle lever and which, on the one hand, interacts with movable electrical contact parts of a switching apparatus (3) via a switching piece (2) and which, on the other hand, is guided with its free end region (4) outwards through an opening (5) of a cover plate (6), the switching apparatus (3) being connected to a supporting ring (7) and having the electrical connection contact parts necessary for connection to an electrical installation system of a building, wherein an adapter (8) is fixed to at least one switching piece (2) of the switching apparatus, which adapter provides a receptacle (9) for fixing the at least one actuating element (1) designed as toggle lever, **characterized by the fact** that a plurality of latching arms (10) are formed on the adapter (8) and cooperate with correspondingly designed latching edges (11) formed on the contact piece (2) to produce a latching connection, and that at least one clip tongue (12) is integrally formed on the receptacle and in order to produce a clip connection, interacts in a clipping manner with at least one corresponding notch (13) which is present in the second end region (14), facing the adapter (8), of the actuating element (1) designed as a toggle lever, and that the receptacle (9) provided on the adapter (8) is designed in the shape of a quiver.

2. Electric toggle switch according to Claim 1, **characterised by the fact** that the switching apparatus (3) has a plurality of switching pieces (2) which cooperate with movable electrical contact parts and are each provided with an adapter (8) for fixing an actuating element (1) designed as a toggle lever.

3. Electric toggle switch according to any of Claims 1 to 2, **characterised by the fact** that at least one intermediate part (15), associated with the underside of the cover plate (6) facing the switching apparatus (3), is provided for the displaceable accommodation of a cover part (16) which cooperates with the actuating element (1) designed as a toggle lever.

4. Electric toggle switch according to any of Claims 1 to 3, **characterised by the fact** that the cover plate (6) is surrounded by a design frame (17).

5. Electric toggle switch according to any of Claims 1 to 4, **characterised by the fact** that the actuating element (1) designed as a toggle lever is designed in two parts and consists of a base part (1a) cooperating with the receptacle (9) and a design part (1b) fixed to the base part (1a).

6. Electric toggle switch according to any of Claims 1 to 5, **characterised by the fact** that the receptacle (9) is present at the adapter (8) in one piece.

7. Electric toggle switch according to any of Claims 1 to 5, **characterised by the fact** that the receptacle (9) is connected to the adapter (8) by a material bond.

## Revendications

1. Interrupteur électrique à bascule avec au moins un élément d'actionnement (1) conçu comme un levier à bascule, qui d'une part coopère par l'intermédiaire d'une pièce de commutation (2) avec des pièces de contact électriques mobiles d'un appareil de commutation (3) et qui d'autre part est guidé avec sa zone d'extrémité libre (4) vers l'extérieur à travers une ouverture (5) d'une plaque de recouvrement (6), l'appareil de commutation (3) étant relié à une bague de support (7) et présentant les pièces de contact de raccordement électrique nécessaires pour le raccordement à un système d'installation électrique d'un bâtiment, dans lequel un adaptateur (3) est accroché à au moins une pièce de commutation de l'appareil de commutation, lequel adaptateur possède un réceptacle (9) pour recevoir l'au moins un élément d'actionnement (1) conçu comme un levier à bascule, **caractérisé en ce qu'**une pluralité de bras d'encliquetage (10) sont formés sur l'adaptateur (8) et coopèrent avec des arêtes d'encliquetage (11) formées de manière correspondante sur la pièce de contact (2) pour produire une connexion par encliquetage, et **en ce qu'**au moins une languette d'encliquetage (12) est formée sur le réceptacle (9), laquelle, afin de réaliser une liaison par encliquetage, coopère par encliquetage avec au moins une encoche (13), qui est présente dans la deuxième zone d'extrémité (14), tournée vers l'adaptateur (8), de l'élément d'actionnement (1) conçu comme un levier à bascule, et **en ce que** le réceptacle (9) prévu sur l'adaptateur (8) est conçu en forme de carquois.

2. Interrupteur électrique à bascule selon la revendication 1, **caractérisé en ce que** l'appareil de commutation (3) présente une pluralité de pièces de commutation (2) qui coopèrent avec des pièces de contact électrique mobiles et sont pourvues chacune d'un adaptateur (8) pour la fixation d'un élément d'actionnement (1) conçu comme un levier à bascule.

3. Interrupteur électrique à bascule selon l'une quelconque des revendications 1 à 2, **caractérisé en ce qu'**à la face inférieure de la plaque de recouvrement (6) tournée vers l'appareil de commutation (3) est associée au moins une pièce intermédiaire (15), qui est prévue pour recevoir de manière mobile une pièce de recouvrement (16) qui coopère avec l'élément d'actionnement (1) conçu comme un levier à bascule.

4. Interrupteur électrique à bascule selon l'une quelconque des revendications 1 à 3, **caractérisé en ce que** la plaque de recouvrement (6) est entourée d'un cadre de design (17).

5. Interrupteur électrique à bascule selon l'une quelconque des revendications 1 à 4, **caractérisé en ce que** l'élément d'actionnement (1) conçu comme un levier à bascule est conçu en deux parties et se compose d'une partie de base (1a) coopérant avec le réceptacle (9) et d'une partie de design (1b) fixée à la partie de base (1a).

6. Interrupteur électrique à bascule selon l'une quelconque des revendications 1 à 5, **caractérisé en ce que** le réceptacle (9) est prévu en une seule pièce sur l'adaptateur (8).

7. Interrupteur électrique à bascule selon l'une quelconque des revendications 1 à 5, **caractérisé en ce que** le réceptacle (9) est relié à l'adaptateur (8) par une liaison matérielle.
